# EUROPEAN PATENT APPLICATION

(11) **EP 0 653 610 A1**
(43) Date of publication of application: **17.05.1995**
(21) Application number: 94308332.9
(22) Date of filing: 11.11.1994
(51) Int. Cl.: G01F 15/14, G01F 15/18, G01F 15/00, E03B 7/07

(54) **Water meter housing**

(30) Priority: 11.11.1993 GB 9323247
(71) Applicant: Atlantic Plastics Limited, Penarth, South Glamorgan CF6 2BE (GB)
(72) Inventor: Evans, Philip David, Mountain Ash, Mid-Glamorgan CF45 4LL (GB)
(74) Representative: Lainé, Simon James

(57) **Abstract**

A water meter housing (3) has two mutually telescoped parts (4, 5) which fit an aperture in a wall, the parts being adjusted to the thickness. On the outside there is a cover (8) and on the inside a cowl and cover assembly (11, 12) housing an upstream stop valve (22) and a downstream valve system (27, 30, 32) which allows through flow or selective drainage. Between these there is coupled a water meter (16,51) which is within the housing (3) or the cowl and cover assembly (11, 12) and readable from the exterior. The stop valve (22) is operable either by a consumer within the building, or by an authorised person through the housing (3). The drain valve system has similar dual operation, the drain (33) to within the housing being for test purposes. The housing (3) may contain insulation (9, 34, 47) and one block (34) of this may be lockable in place and thereby deny access to the stop valve (22) and the drain valve system (27, 30, 32) through the housing.

## Description

This invention relates to water meter housings.

We already manufacture and sell a self-contained boundary box combining a stop cock and a water meter which is designed to be sunk into the ground at the boundary of a property to allow metering of the water supply into the property and also to allow isolation of the supply. Whilst this design has been extremely successful there are drawbacks associated with this system as the meter is not readily accessible to the occupier of the property to allow him to read the meter. In this specification, the terms "interior" and "exterior" are used to differentiate between the different sides of a boundary wall in a house, flat, commercial or industrial premises or other dwelling or industrial commercial unit, and do not limit the invention to use on an exterior wall.

According to the present invention there is provided a housing assembly for a water meter, the assembly having a housing adapted to be installed in the wall of a building and having at its interior end a mounting for a meter readable through the housing from the exterior, the supply to and the delivery from the meter being on the interior of the wall.

Preferably, the mounting includes a manifold which provides a coupling for a meter to the supply and the delivery. Meters may be supplied separately, by the local Water Undertaking for example, but the housing assembly can be put in place and used before metering is required or wanted. There will therefore be available blanking means which can be substituted for a meter and attached to the manifold to permit full unmetered flow, restricted flow, or no flow at all.

Generally there will be a stop valve in the supply and it may be operable both from within the housing and from the inside of the building. There will also preferably be drain valve means in the delivery, and those may be operable from within the housing to drain therein and from the inside of the building to drain on that side. When operated from within the housing, these valve means may isolate the delivery and direct all supply water to the drain within the housing.

The housing drain facility is provided primarily to enable tests to be made by the Water Undertaking, for example on meter accuracy, water quality and pressure. Suitable test apparatus is connected to the housing drain and water diverted to it.

Further advisable components will be a check valve downstream of the meter position to prevent reverse flow from the delivery, and a filter upstream of the meter position.

The housing is conveniently formed by two mutually telescoped parts whose overlap is sealed according to the wall thickness. It can thus accommodate to variations from a "standard" thickness. It will preferably have a closable cover at its exterior end, while at the opposite, interior end there may be a fixed cowl to the interior side of which is fitted a cover forming a chamber in which connections to the supply and delivery are concealed. This guards against attempts to bypass the meter. The supply, where it is exposed upstream of the cowl, may also be protected by a secure barrier. The cowl and cover do, however, provide access to operating members of the stop valve and drain valve means within said chamber, and openings for the associated drain outlets.

The housing will advantageously be substantially filled, apart from any meter therein, with insulating material such as a closed cell copolymer. This may include a block which can be locked in place, thereby denying access to the stop valve and the drain valve means from within the housing. Thus the Water Undertaking, by locking this block in place, can prevent unauthorised use of the exterior controls. But the block will conveniently have a passage through which a meter can be read from the exterior, and a freely removable insulating plug can be provided for this passage.

For a better understanding of the invention, some embodiments will now be described, by way of example, with reference to the accompanying drawings, in which:
Figure 1 is a section through a water meter housing installed in a wall, the meter being of concentric pattern,
Figure 2 is a perspective view of a locking device for use in the housing, and
Figure 3 is a section through part of a modified housing containing an in-line meter.

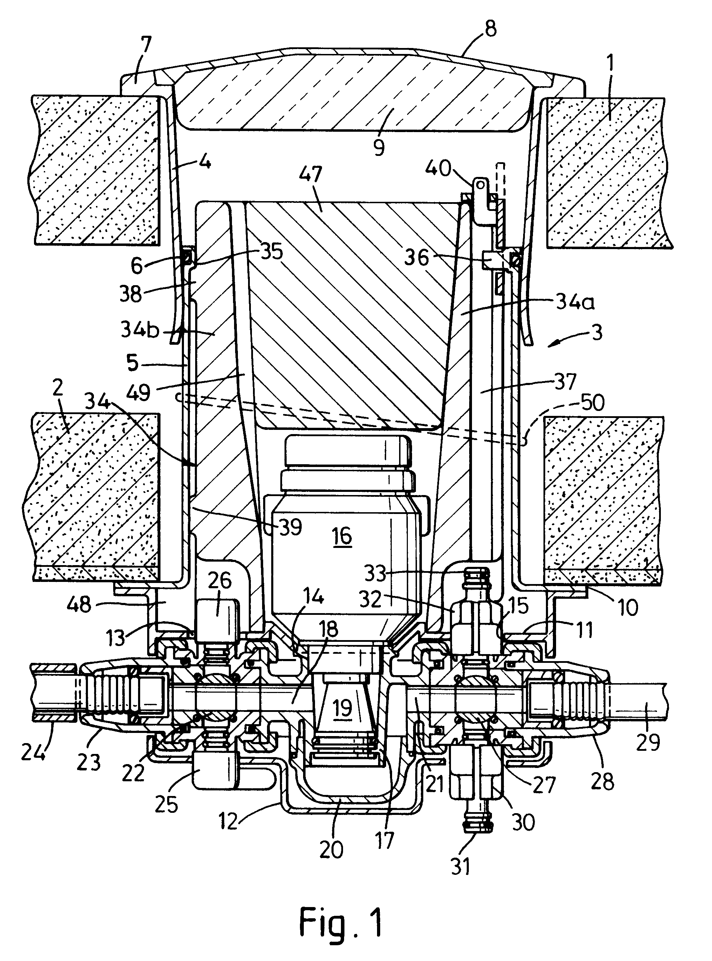

In Figure 1 a cavity wall has an outer leaf 1 and an inner leaf 2. Aligned apertures are formed to receive a water meter housing 3, and conveniently it is sized so that a neat fit is obtained by removing whole bricks.

The housing 3 has two telescoping parts 4 and 5 whose overlap is sealed at 6. This allows for variations in wall thickness, but when installed the two parts may be permanently attached, as by bonding. The outer part 4 has a flange 7 which bears and seals against the outside of the leaf 1, and is closed at this end by a cover 8. It may be hinged horizontally at its upper edge or vertically at a side edge, and preferably it is sprung towards the closed position, where it may be latched or locked. Those details are not shown. On the inside, the cover 8 carries an insulating block 9 shaped not to impede opening and closing. The inner part 5 of the housing has a flange 10 which bears and seals against the inside of the leaf 2, and it is spanned at this end by a cowl 11.

The cowl 11 is secured to the flange 10 and provides a saddle or mounting for various components to be described below, and a cover 12 fits to it to conceal those components. The cowl has three in-line apertures 13, 14 and 15, the central aperture 14 being associated with the water meter 16 itself. In this example, the meter is of the concentric inlet and outlet kind and its base fits to a manifold 17 which seats in the aperture 14. The inlet 18 to the manifold is to the left as seen in Figure 1, and water flows around a check valve 19 at the outlet of the meter 16 before entering the meter, preferably through a filter (not shown). Having been metered, the water enters a dome 20 sealed over the main body of the manifold, and is then returned to an outlet 21 co-axial with the inlet 18. The check valve 19 (which may be doubled) prevents any reverse flow into the meter.

On the upstream side of the manifold 17 there is a stop valve 22, registering with the aperture 13, the valve body being sealed at one side to the manifold 17 and at the other side to an inlet coupling 23 projecting outside the cowl 11 and cover 12 and to which a supply pipe 24 is connected. This may be by a push fit, a compression joint, or other conventional means. The valve 22 has two operating members, one being a handle or knob 25 accessible outside the cover 12 to the consumer within the building, and the other being a socket 26 projecting through the aperture 13 into the housing 1. This may only be operated by the Water Undertaking, who gain access to it through the cover 8 and by removal of insulation, as described below.

On the downstream side of the manifold 17 there is another valve 27 registering with the aperture 15, the valve being sealed at one side to the manifold 17 and at the other side to an outlet coupling 28 projecting outside the cowl 11 and cover 12 and to which a delivery pipe 29 is connected, similarly to and in line with the inlet pipe. But there could be one or more branches here, to direct water to several destinations.

Branching off from the valve 27, in symmetry with the knob 25, is a consumer drain cock 30 with a nozzle 31 outside the cowl 11 to facilitate hose connection. Opposite this, projecting through the aperture 15 into the housing 1, is another drain cock 32 with an associated nozzle 33. Like the socket 26, this also is only accessible to the Water Undertaking. It is coupled with a form of lost motion to the valve 27, and when fully opened it turns that valve to isolate the manifold 17 from the delivery pipe 29 and the rest of the plumbing system and to divert all flow from the manifold to the nozzle 33. But while being opened, the drain cock 32 leaves the valve 27 in its normal state allowing free flow from the manifold to the pipe 29. If the consumer wants to drain down the system using the nozzle 31 he will turn off the supply by the knob 25 and then open the drain cock 30. The valve 27 will remain in the free flow position.

The main purpose of the drain cock 32 is to permit the Water Undertaking to fit test apparatus into which the metered supply can be diverted, and thus enable the accuracy of the meter, water pressure or water purity to be checked.

However, it could be used to drain the system by opening the drain cock 32 to a position short of closing off the valve 27, the valve 22 having been shut off using the socket 26.

Instead of having the knob 25 and the drain members 30 and 31 exposed, they may be concealed behind a removable or openable panel. Also, instead of having the manifold 17 and the bodies of the valves 22 and 27 separately manufactured and then fitted together, as shown, it is intended that a single plastics moulding should be substituted.

Further insulation is provided apart from the block 9. A removable tubular diametrically divided block 34 is designed to fit around the meter 16 and over the socket 26 and the drain cock 32, and to be locked in place. The division is at right angles to the plane of the drawing, and the two halves are designated 34a and 34b. This provides security against unauthorised tampering with the socket 26 and the drain cock 32 while permitting the meter 16 to be read.

The rim of the inner part 5 of the housing 1 is formed not only to receive the seal 6 on the outside but to provide an inward rib 35. This has a lug 36 at one point to engage in a T-section longitudinal groove 37 in the exterior of the half block 34a. Opposite this groove, the exterior of the half block 34b has two integral projections 38 and 39 extending around most of the curved surface, one near the outer end, the other near the inner end. The outer projection 38 normally engages under the rib 35, as shown, and when the complete block 34 is in position a locking device 40 captive to the lug 36 is secured, trapping the half block 34a.

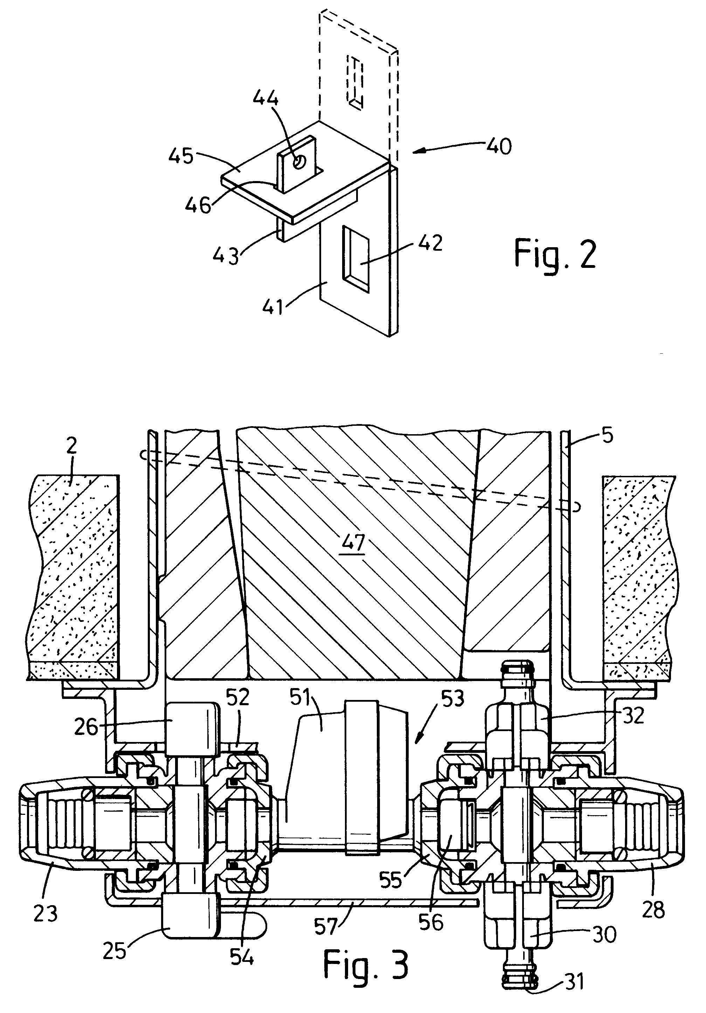

This locking device 40 is shown more clearly in Figure 2. It has a vertical rectangular plate 41 which fits the wide mouth of the groove 37 and which has a slot 42 through which the lug 36 projects. Above this an L-shaped arm 43 projects inwardly (in relation to the housing) and then upwardly to terminate above the plate 41, where it has an aperture 44. A hasp 45 with a slot 46 is hinged to the upper edge of the plate 41 and can swing from an upright (dotted line) position to a horizontal one where the upper end of the L-shaped arm 43 projects through the slot 46. This is the locking position, a seal or other device being attached through the aperture 44 and preventing raising of the hasp 45. The free end of the hasp, overlying the half-block 34a at the top end of the groove 37 traps that half-block.

For release, the seal is removed and the hasp 45 raised. The half-block 34a can now be pulled out, the tip of the lug 36 and the arm 43 sliding within the stem or narrow part of the T-slot 37 and the plate 41 and the hasp 45 sliding within the cross bar or mouth of that slot. Once that half-block is clear, the other one 34b can be tilted to bring the projection 38 clear of the rib 35 and eased out at a slight angle until the inner end is clear of the meter 16. Then it can be displaced sideways for the projection 39 to clear the rib 35 and pulled completely clear.

The final bit of insulation is a frusto-conical plug 47 which seats in the mouth of the tubular block 34 and reaches almost to the face of the meter 16. It will have a recessed handle (not shown) by which it can be extracted.

The housing 3 itself will preferably be of plastics material with good thermal insulating properties, or at least it will have a cold "break" to reduce the conduction of heat.

Generally the pipe 24 will be vertical, the supply being from underground. The stop valve 22 will therefore be lowermost, and any leakage from it, after filling sump 48, will trickle past the projections 39 and 38 and thence to the exterior. If the block 34 is a tight fit to the manifold 17, then any seepage from the drain cock 32 will find its way round the block 34 and escape by the same route. Any water escaping from the meter, however, and any from the drain cock 32 that might penetrate past the base of the block 34, will be directed to a channel 49 formed in the inner curved surface of the half block 34b which provides a seat for the block 47.

The inner part 5 of the housing may be encircled by a drip ring 50 as indicated in broken lines to stop moisture on the outside of the housing 3 creeping to the inner leaf 2.

The arrangement provides easy access for the consumer to the stop cock and drain arrangements, while also allowing him to inspect the meter. However, he can go no further than that, and only the Water Undertaking will have the means to remove or replace the meter and to access the socket 26 and the drain cock 32. The arrangement allows the meter to be removed entirely and replaced with a simple blanking plate, enabling full flow unmetered supply. Alternatively, there could be fitted a blanking cover which would either restrict the flow, or prevent it altogether. These plates and covers, and the meter if provided, may all be fitted with a suitable security device.

Figure 3 shows a modification for an in-line meter 51. The housing 1 is the same, and so are the inlet and outlet assemblies, but they are not fitted to a common manifold. They are carried by a slightly different cowl 52, with a much larger central aperture 53. An adaptor 54 couples the inlet to the upstream end of the meter 51 and another adaptor 55 directs the metered water to a check valve 56 at the entry to the outlet assembly. The meter is thus housed on the inside of the inner leaf 2, and the insulating plug 47 can be longer, filling the entire passage through the block 34. A cover 57 for the valve/meter assembly is also slightly different from the cover 12 of Figure 1.

In some circumstances, insulation will not be required. Therefore, instead of having a plain socket 26 protected by the locked insulation, valve 22 may only be operable from the housing side by a special key.

For extra security the cover 8 may have a lock whose key is only available to the Water Undertaking. Unless it is transparent, and the plug 47 dispensed with, the consumer will then not be able to check the meter. In those circumstances, a repeater may be provided inside the building, for example on the cover 12 or 57.

## Claims

1. A housing assembly for a water meter, the assembly having a housing (4, 5) adapted to be installed in the wall (1, 2) of a building and having at its interior end a mounting (1, 52) for a meter (16, 51) readable through the housing from the exterior, the supply (24) to and the delivery (29) from the meter being on the interior of the wall.

2. A housing assembly as claimed in Claim 1, characterised in that the mounting includes a manifold (17) which provides a coupling for a meter (16) to the supply and the delivery.

3. A housing assembly as claimed in Claim 2, and including blanking means which can be substituted for a meter and attached to the manifold (17) to permit full unmetered flow, restricted flow or no flow at all.

4. A housing assembly as claimed in Claim 1, 2 or 3, characterised by a stop valve (22) in the supply operable both from within the housing and from the inside of the building.

5. A housing assembly as claimed in any preceding claim, characterised by drain valve means (30, 32) in the delivery, operable from within the housing (4, 5)to drain therein and from the inside of the building to drain on that side.

6. A housing assembly as claimed in Claim 5, characterised in that the drain valve means (32) is adapted, when operated from within the housing, to isolate the delivery and to direct all supply water to the drain (33) within the housing.

7. A housing assembly as claimed in any preceding claim, characterised in that the housing has two mutually telescoped parts (4, 5) whose overlap is sealed (6) according to the wall thickness, and in that at the exterior end of the housing there is a closable cover (8).

8. A housing assembly as claimed in any preceding claim, characterised in that the interior end of the housing is spanned by a cowl (11, 52) to the interior side of which is fitted a cover (12, 57) forming a chamber in which connections to the supply and delivery are concealed.

9. A housing assembly as claimed in Claim 8, as appendant to Claims 4 and 5, characterised in that the cowl (11, 52) and cover (12, 57) provide access to operating members (25, 26) of the stop valve (22) and drain valve means (30, 32) within said chamber, and openings for the associated drain outlets (31, 33).

10. A housing assembly as claimed in any preceding claim, characterised in that the housing (4, 5) is substantially filled, apart from any meter therein, with insulating material(9, 34, 47) including a block (34) which can be locked in place, thereby denying access to the stop valve (22) and the drain valve means (32) from within the housing, the (34) block having a passage through which a meter can be read from the exterior on removal of an insulating plug (47) which may be provided for this passage.
